(19) Europäisches Patentamt
European Patent Office
Office européen des brevets

(11) EP 4 432 534 A1

(12) EUROPEAN PATENT APPLICATION

(43) Date of publication:
18.09.2024 Bulletin 2024/38

(21) Application number: 24162639.9

(22) Date of filing: 11.03.2024

(51) International Patent Classification (IPC):
H02M 1/00 $^{(2006.01)}$   H02M 3/156 $^{(2006.01)}$
H02M 3/157 $^{(2006.01)}$

(52) Cooperative Patent Classification (CPC):
H02M 3/1566; H02M 1/0025; H02M 1/0032;
H02M 1/0048; H02M 3/157

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.03.2023 US 202318122636

(71) Applicant: Avago Technologies International
Sales
Pte. Limited
Singapore 768923 (SG)

(72) Inventors:
• Li, Shengyuan
  Irvine, 92618 (US)
• Jiang, Xicheng
  Irvine, 92612 (US)

(74) Representative: Bosch Jehle
Patentanwaltsgesellschaft mbH
Flüggenstraße 13
80639 München (DE)

(54) **APPARATUS FOR DYNAMICALLY MODIFYING SWITCHING-MODE POWER SUPPLY EFFICIENCY**

(57)    An apparatus of the subject technology includes a first comparator circuit having a first offset voltage and a first circuit to generate a first code based on the first offset voltage. The apparatus further comprises a second comparator circuit having a second offset voltage and a second circuit that generates a second code based on the second offset voltage and the first code. The first offset voltage and the second offset voltage are partially compensated based on the second code.

*FIG. 2*

**Description**

The present description relates generally to electronic circuits, including, for example, a method and apparatus for dynamically modifying switching-mode power supply efficiency.

A switching-mode power supply (SMPS) switches on a power stage to charge an inductor during a duty cycle time set by a pulse width modulator. The stored energy in the inductor will then be transferred to output by switching off the power stage during the rest of this switching cycle. This type of switching behavior makes SMPS's startup current a triangular shape instead of a direct current (DC) as in the linear regulators, which suggests that the SMPS's input current would have a high crest factor.

An SMPS operates in pulse width modulation (PWM) mode with a fixed switching frequency. Depending on the load level, the SMPS either operates in a continuous conduction mode (CCM) or a discontinuous conduction mode (DCM). In the CCM, the inductor current is continuous during the entire period at steady state. In the DCM, the inductor current will be zero for a portion of the switching period. The SMPS uses a boost converter, which includes a power stage and a controller. To achieve a better efficiency at a light load, pulse frequency modulation (PFM) is usually adopted to skip pulses a number of pulse cycles to effectively lower the switching frequency. Lowering the switching frequency leads to linearly scaling down the switching loss, resulting in higher efficiency at the light load rather than using the PWM with a fixed frequency.

Because, in active mode, the load current level can vary from zero to full load to get the best efficiency over the whole load range, PWM plus PFM operation is preferred. Measured efficiency of a boost converter over an entire load range (e.g., 0 to 1A) indicates that the efficiency can drop to about 25% at about 5 milliampere (mA) load. With PFM threshold set at 80 mA, about 50.2% of the efficiency loss can be recovered. Further, with 40 mA PFM threshold, about 6.2% of efficiency loss with respect to the 80 mA setting is observed.

An existing approach uses a fixed PFM digital-to-analog converter (DAC) code to set the PFM threshold voltage, which is compared with an error voltage to determine how PWM pulses will be skipped. This approach does not account for various offsets and dependencies on input and output voltages of the boost converter, which results in efficiency and speed degradation.

According to an aspect, an apparatus is provided, comprising:

a first comparator circuit having a first offset voltage;
a first circuit configured to generate a first code based on the first offset voltage;
a second comparator circuit having a second offset voltage; and
a second circuit configured to generate a second code based on the second offset voltage and the first code, wherein the first offset voltage and the second offset voltage are partially compensated based on the second code.

Advantageously, the apparatus further comprises a third circuit coupled to the first comparator circuit, wherein:

the third circuit has a third offset voltage, and
the first code is generated based on the third offset voltage.

Advantageously, the first circuit is configured to determine the first offset voltage in response to the first comparator circuit switching a binary output.

Advantageously, the apparatus further comprises a sensing resistor coupled to the first comparator circuit, wherein:

the sensing resistor has a fourth offset voltage, and
the first code is generated based on the fourth offset voltage.

Advantageously, the apparatus further comprises:
a calculator circuit configured to:

receive one or more sensed input and output voltages, and
provide a third code based on the sensed input and output voltages.

Advantageously, the apparatus further comprises a fourth circuit configured to generate a fifth code based on the second code and the third code.

Advantageously, the fifth code is configured to further compensate the first offset voltage and the second offset voltage.

Advantageously, the apparatus further comprises a plurality of components, wherein:

each of the plurality of components comprises respective offset voltages, and
the fifth code is configured to further compensate the respective offset voltages.

According to an aspect, an apparatus is provided, comprising:

a first component having a first offset voltage;
a first circuit configured to:

receive one or more sensed voltages, and
provide a first code based on the one or more sensed voltages; and

a second circuit configured to:

receive the first code,
receive a second code, wherein the second code is based on the first offset voltage, and
generate a third code configured to compensate the first offset voltage.

Advantageously, the apparatus further comprises a comparator circuit, wherein the first offset voltage is associated with the comparator circuit.

Advantageously, the apparatus further comprises a component comprising a second offset voltage, wherein the third code is further configured to compensate the second offset voltage.

Advantageously, the component comprises a ramp voltage generator circuit.

Advantageously, the component comprises a sensing resistor.

Advantageously, the apparatus further comprises a pulse width modulation (PWM) generator circuit configured to operate based on a threshold current, wherein the third code is configured to maintain an operating current for the PWM generator circuit above the threshold current.

Advantageously, the one or more sensed voltages comprise an input voltage from a power source.

Advantageously, the one or more sensed voltages comprise an output voltage for a load.

According to an aspect, a circuit is provided, comprising:

a plurality of components, wherein each of the plurality of components has a respective offset voltage;
a first circuit configured to generate a first code corresponding to i) the respective offset voltage and ii) a first comparator offset voltage;
a second circuit configured to generate a second code based on the first code and a second comparator offset voltage;
a current offset calculator circuit configured to:

obtain an input voltage,
provide a third code based on the input voltage; and

a third circuit configured to generate a fourth code based on the second code and the third code, wherein the fourth code is configured to compensate the respective offset voltages, the first comparator offset voltage, and the second comparator offset voltage.

Advantageously, the plurality of components comprises a ramp voltage generator circuit.

Advantageously, the plurality of components comprises a sensing resistor.

Advantageously, the plurality of components comprises one or more comparator circuits.

BRIEF DESCRIPTION OF THE DRAWINGS

Certain features of the subject technology are set forth in the appended claims. However, for purposes of explanation, several aspects of the subject technology are depicted in the following figures:

FIG. 1 illustrates a high-level diagram illustrating an example of a regulator circuit, according to one approach.

FIG. 2 illustrates a block diagram of an example of an integrated circuit for dynamically modifying an efficiency of an SMPS, according to aspects of the subject technology.

FIG. 3 illustrates a block diagram of an example of an integrated circuit for dynamically modifying an efficiency of an SMPS, according to aspects of the subject technology.

FIG. 4 illustrates a chart illustrating silicon measurement results of an example of an integrated circuit for dynamically modifying an efficiency of an SMPS, according to aspects of the subject technology.

FIGS. 5A, 5B, and 5C illustrate charts showing silicon measurement results of an example of an integrated circuit for dynamically modifying an efficiency of an SMPS, according to aspects of the subject technology.

FIG. 6 illustrates a flow chart illustrating an example of a process for implementing a calibration procedure, according to aspects of the subject technology.

FIG. 7 illustrates an example of a wireless communication device, within which some aspects of the subject technology are implemented.

DETAILED DESCRIPTION

The detailed description set forth below is intended as a description of various configurations of the subject technology and is not intended to represent the only configurations in which the subject technology may be practiced. The appended drawings are incorporated herein, and constitute a part of the detailed description. The detailed description includes specific details for the purpose of providing a thorough understanding of the subject technology. However, the subject technology is not limited to the specific details set forth herein, and may be practiced using one or more implementations. In one or more instances, structures and components are shown in block diagram form in order to avoid obscuring the concepts of the subject technology.

According to some aspects, the subject technology is directed to a method and apparatus for dynamically modifying an efficiency of an SMPS. The subject technology is applicable to electronic devices including, but limited to, health modules and wearable devices such as smartphones and other similar devices with health applications. The disclosed technology modifies an existing approach to account for various offsets and dependencies on input and output voltages of the boost converter of the SMPS, which resulted in efficiency and speed degradation.

The subject technology uses a search method, for example, a binary search to determine offset contributions from various circuits coupled to a PWM generator of the boost converter. The binary search is an efficient algorithm for finding an item from a sorted list of items. It works by repeatedly dividing in half the portion of the list that could contain the item, until the possible locations are narrowed down to just one. The subject technology further modifies a DAC code (also referred to as a first code) used to set a PFM threshold voltage to incorporate dependencies of the input and output voltages of the boost converter. The DAC code is compared with an error voltage that is used to set a condition for skipping of the PWM pulse cycles.

The technique of the subject technology has advantageous features compared to the existing approach, which uses a fixed DAC code to set the PFM threshold voltage. The advantageous features include, but is not limited to, a higher efficiency (e.g., above 80%) maintained throughout an entire range of the load current (e.g., 0 to about 140 milliampere (mA)) with negligible dependencies on the input and output voltages of the boost converter.

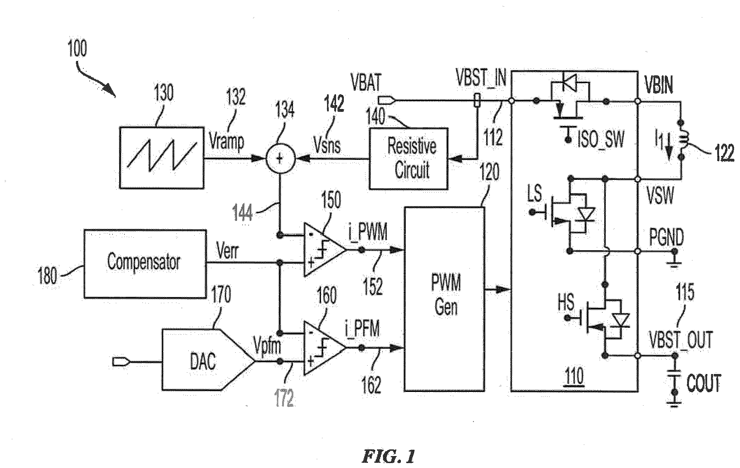

FIG. 1 is a high-level diagram illustrating an example of a regulator circuit 100, according to one approach. The regulator circuit 100 (or simply, circuit) includes a boost converter circuit 110, a PWM generator circuit 120, a ramp voltage generator circuit 130, a resistive circuit 140, a PWM comparator circuit 150, a PFM comparator circuit 160, a DAC circuit 170, and a compensator 180. In some embodiments, the boost converter circuit 110 includes a power stage circuit configured to supply a voltage (and current) at a specified voltage. The boost converter circuit 110 includes an isolation switch (ISO_SW), a low-side (LS switch), and a high-side (HS) switch. The boost converter circuit 110 is powered by a voltage (VBAT) of a power source such as a battery. The boost converter circuit 110 is connected to an inductor 122 and provides an output voltage (VBST_OUT) greater than VBAT at an output capacitor (COUT) connected between an output port 115 and the ground. Thee boost converter circuit 110 uses the LS and HS switches, which are controlled by PWM pulses of the PWM generator circuit 120, to switch a first current Ii through the inductor 122 at a switching frequency. In some embodiments, switching of the first current Ii is performed by a combination of PWM and PFM operations of the boost converter circuit 110. The resistive circuit 140 may include a sensing resistor. In some embodiments, a sensing resistor converts a current to a voltage that can be sensed, thereby sensing resistor acts as current-to-voltage converter. The resistive circuit 140 senses a current at a node 112 and produces a sense voltage 142 (Vsns). The ramp voltage generator circuit 130 generates a ramp voltage 132, which is added to the sense voltage 142 by the adder 134 to generate the PWM voltage 144 (Vpwm).

The PWM comparator circuit 150 compares the PWM voltage 144 with an error voltage 182 (Verr) and generates a PWM current 152 (i_PWM) based on the comparison result. The PWM comparator circuit 150 may generate a binary output (e.g., binary 0 or 1), based on a comparison with an error voltage Verr. In this manner, the PWM current 152 may include a pulsed output that conveys a binary output. The PWM current 152 is used by the boost converter circuit 110 to set a duty cycle of PWM pulses. The PFM comparator circuit 160 compares an error voltage Verr with a PFM voltage 172 (Vpfm) generated by a DAC circuit 170 and generates a PFM current 162 (i_PFM) based on the comparison result. The PFM current may include a pulsed output that conveys a binary output. The PFM current 162 is used by the boost converter circuit 110 to skip a number of cycles of the PWM pulses to lower the switching frequency of the PWM pulses, for example, to an audio threshold frequency (e.g., 20 kilohertz (KHz)).

The regulator circuit 100, as described above, may not account for various offsets and dependencies on the input voltage (VBAT) and output voltage (VBST_OUT) of the boost converter circuit 110. In some instances, this can lead to inaccuracies that can result in efficiency and speed degradation.

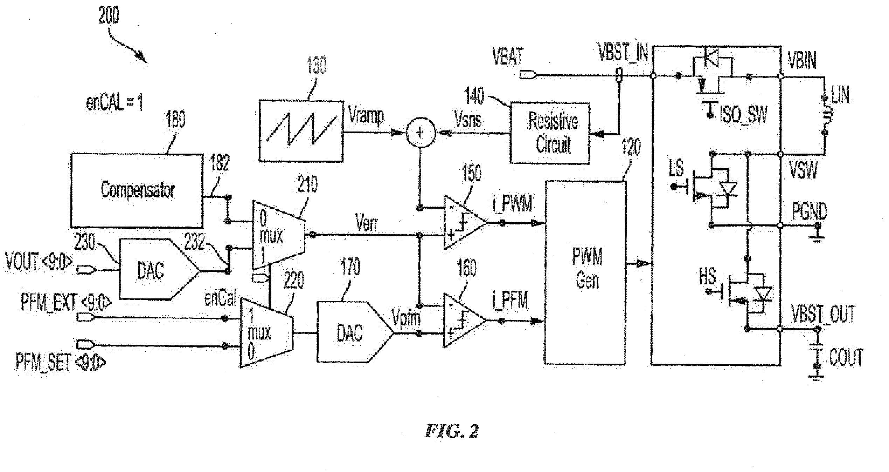

FIG. 2 is a block diagram of an example of an integrated circuit 200 for dynamically modifying an efficiency of an SMPS, according to aspects of the subject technology. The integrated circuit 200 includes, but is not limited to, all components of the regulator circuit 100 such as the boost converter circuit 110, the PWM generator circuit 120, the ramp voltage generator circuit 130, the resistive circuit 140, the PWM comparator circuit 150, the PFM comparator circuit 160, the DAC circuit 170, and the compensator 180. In some embodiments, the boost converter circuit 110 provides a pulsed output current (e.g., Ii of inductor 122). Additionally, the integrated circuit 200 includes a DAC circuit 230, a multiplexer (MUX) circuit 210, and a MUX 220. The enCAL = 1 designation indicates a calibration operation is enabled and the MUX 210 can communicate with the MUX 220, and vice versa. When enCAL = 1, the MUX 210 selects an output 232 of the DAC circuit 230 for transfer to the PWM comparator circuit 150.

The integrated circuit 200 is designed to implement a calibration procedure that compensates offset voltages of a components (or multiple components). The terms "compensate," "compensation," and "compensating" refer to accounting for and minimizing (including partially minimizing or fully eliminating) a value. For example, the ramp voltage generator circuit 130, the resistive circuit 140, the PWM comparator circuit 15, and PFM comparator circuit 160 include respective offset voltages. Accordingly, at least some respective voltage must be applied to each of the aforementioned circuits, at the input, such that the output is equal to zero volts. Offset voltages are a form of an error voltage that tends to introduce some error such that, for example, the PWM generator circuit 120 may provide an incorrect or undesired duty cycle. Beneficially, however, the calibration circuit of the integrated circuit 200 can manage this through compensation.

As shown, the ramp voltage generator circuit 130 and the resistive circuit 140 are coupled (e.g., electrically coupled) to PWM comparator circuit 150 at the inverting node of the PWM comparator circuit 150. As a result, the respective offset voltages - ramp voltage offset (Vramp_os) and a sense voltage offset (Vsns_os) - can be sensed at the inverting node. Additionally, an offset voltage of the PWM comparator circuit 150 (PWMCOMP_OS, also referred to as a first offset voltage) can also be sensed at the inverting node. The offset voltages can result from chip manufacturing process corners and are generally set subsequent to the chip manufacturing process.

Using automated test equipment (ATE), the integrated circuit 200 can determine the offset voltages. For example, the DAC circuit 230 can receive a voltage in digital form. As shown, the received digital voltage code VOUT<9:0> is provided as a control signal in the form a 10-bit digital input. Through a binary search, each voltage sweeps (e.g., incrementally steps up) through the DAC circuit 230 from 0 to 1,023 (all in binary form), where each incremental step represents a linear increase in voltage of a voltage range (e.g., 0 V to 2 V). Accordingly, for a 2-Volt range, 0000000000 represents 0 V and 1111111111 represents 2 V, and each increment step increases by $2^{-10}$ V. The DAC circuit 230 can provide an analog equivalent of each incremental (digital) voltage to the PWM comparator circuit 150 at a non-inverting node of the PWM comparator circuit 150. When the voltage at the inverting node is greater than the voltage at the non-inverting node (e.g., provided by the DAC circuit 230), the PWM comparator circuit 150 outputs a pulse equal to binary 0. However, once the voltage at the non-inverting node (e.g., provided by the DAC circuit 230) is greater than the voltage at the inverting node, the PWM comparator circuit 150 subsequently outputs a pulse (i_PWM) equal to binary 1. In some embodiments, the DAC circuit 230 can determine the (first) offset voltage of the PWM comparator circuit 150 in response to the PWM comparator circuit 150 switching a binary output. For example, when the PWM comparator circuit 150 changes the pulsed output to 1, the voltage provided by the DAC circuit 230 is equal (or approximately equal) to the sum of the respective offset voltages at the non-inverting node of the PWM comparator circuit 150. The binary code corresponding to VOUT provided by the DAC circuit 230 used to change the pulsed output to 1 is recorded. Accordingly, the associated voltage with VOUT is known, as VOUT is governed by:

$$VOUT = Vramp\_os + Vsns\_os + PWMCOMP\_OS \qquad (Eq.\ 1)$$

While a 10-bit DAC is described, the number of bits may change based on the desired resolution.

Using the binary code corresponding to the voltage VOUT, a similar operation can be performed to determine the offset voltage (PFMCOMP_OS) at the PFM comparator circuit 160 (also referred to as a second offset voltage), which is sensed at the inverting node of the PFM comparator circuit 160. As shown, the received digital voltage code PFM_EXT<9:0> is provided as a control signal in the form of a 10-bit digital input. Through an additional binary search, each voltage sweeps (e.g., incrementally steps up) through the DAC circuit 170 from 0 to 1,023 (all in binary form), and when the PFM comparator circuit 160 changes the pulsed output from 0 to 1, the voltage provided by the DAC circuit 170 is equal (or approximately equal) to the sum of the voltages VOUT (e.g., the respective offset voltages at the non-inverting node of the PWM comparator circuit 150) and the offset voltage at the PFM comparator circuit 160. The binary code corresponding to PFM_EXT provided by the DAC circuit 170 used to change the pulsed output to 1 is recorded. Accordingly, the associated voltage with PFM_EXT is known. The PFM_EXT represents a base code (IPFM_BASE<9:0>) for a current to be applied in applications using the integrated circuit 300, and the associated voltage represents the collective offset voltages of the integrated circuit 200 that can be compensated. The voltage associated with PFM_EXT is governed by:

$$PFM\_EXT = VOUT + PFMCOMP\_OS \qquad (Eq.\ 2)$$

where VOUT was found in Eq. 1. Further, the binary code corresponding to PFM_EXT can be stored and reused for later use.

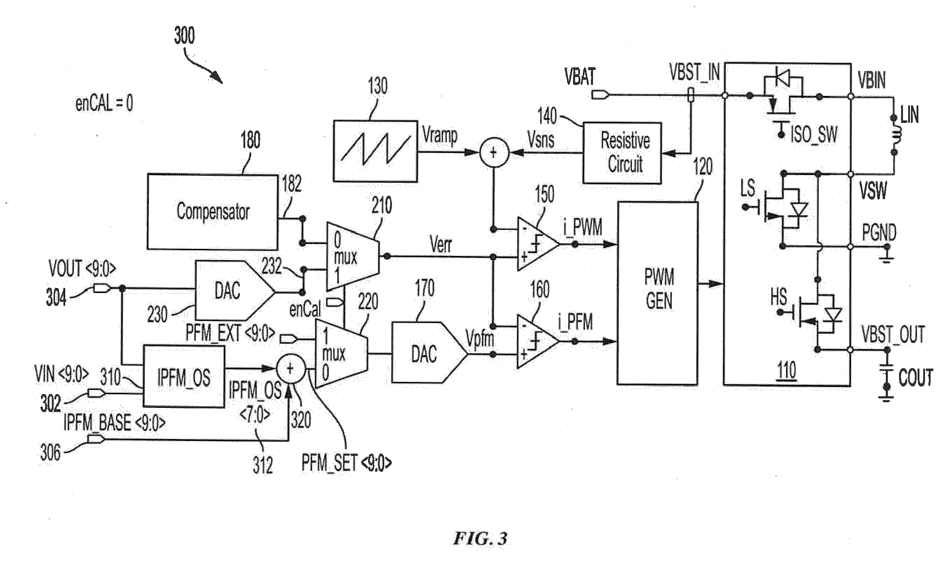

Referring to FIG. 3, an integrated circuit 300 is shown. The integrated circuit 300 included the integrated circuit 200 (shown in FIG. 2) plus additional features. Also, the enCAL = 0 designation indicates a calibration operation is not enabled and the MUX 210 cannot communicate with the MUX 220, and vice versa.

The integrated circuit 300 includes a PFM current offset calculator circuit 310 and a summation circuit 320 (also referred to as a fourth circuit). The PFM current offset calculator circuit 310 is designed to account for a PFM threshold dependency based upon input and output voltages of the integrated circuit 300. For example, the PFM threshold dependency can change based upon a change in power source provided at the input voltage 302 (VIN), and/or based upon a change in load requirements for a load connected to an output voltage 304 (VOUT). The PFM current offset calculator circuit 310 can determine a corresponding offset code (IPFM _OS), based on one or more of the sensed input and output voltages, and output a voltage corresponding to the offset code. The offset code is governed by:

$$IPFM\_OS = Ri* (VOUT/VIN)*sqrt [2*(VOUT-VIN)*I_{pfm}\_TH/F_{sw}/LIN] \qquad (Eq.\ 3)$$

where is the switching frequency of the boost converter circuit 110, Ri is the resistance of the resistive circuit 140, and IPFM_TH is the PFM threshold current. In some embodiments, the PFM threshold current is the minimum operating current required to maintain a desired switching frequency of the PWM generator circuit 120, and is approximately in the range of 110 - 180 mA. In some embodiments, the operating current is 140 mA.

The summation circuit 320 combines the offset code (IPFM_OS) and the base code (IPFM_BASE<9:0>) received at an input 306, and outputs a PFM register code (PFM_SET<9:0>). The PFM register code provides a code for i) compensating for offset voltages at various components of the integrated circuit 300, and ii) accounting for components connected to the integrated circuit 300 at VIN and VOUT. In some embodiments, the values (e.g., codes) are in a memory module (not shown for simplicity) and can be dynamically retrieved to modify an efficiency of the boost converter circuit 110. In some embodiments, dynamically retrieving the stored values can be achieved by periodically reading (e.g., based on a clock signal) the memory module to retrieve the stored values.

When the integrated circuit 300 is operating in active mode, the load current can change momentarily. In order to improve the efficiency of the boost converter circuit 110, the PFM threshold current has to be dynamically modified at low load currents. For example, below 100 mA of load current, without PFM mode, the efficiency may be reduced by about 30% at a load current equal to about 80 mA. At the same, 80 mA of load current, changing the PFM threshold current, for example, to 40 mA, or 80 mA, would increase the efficiency to about 70% or about 78%, respectively. The subject technology improves efficiency by taking into account the factors that inversely affect the efficiency.

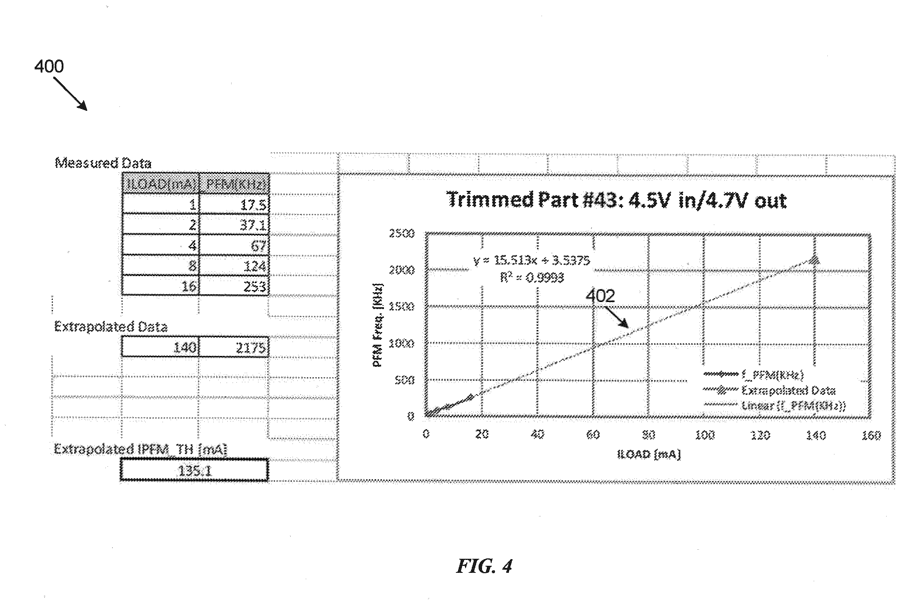

FIG. 4 is a chart 400 illustrating silicon measurement results of an example of an integrated circuit for dynamically modifying an efficiency of an SMPS, according to aspects of the subject technology. The chart 400 includes a plot 402 that shows variation of the PFM frequency, in KHz, versus load current (ILOAD), in mA, for an input voltage of 4.5 V, and output voltage of 4.7 V. The extrapolation from the measured portion of the plot reached an extrapolated iPFM_TH of about 135.1 mA, at about 2.1 MHz, which is sufficiently close to the expected value of 140 mA.

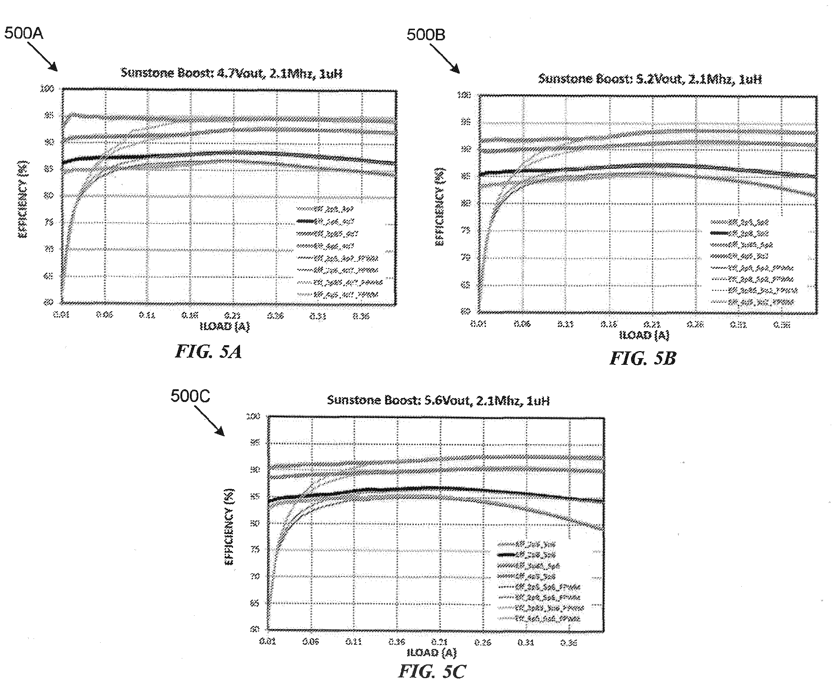

FIGS. 5A, 5B, and 5C are charts 500A, 500B, 500C, respectively, illustrating silicon measurement results of the integrated circuits 200 and 300 of FIG. 2 and 3, respectively, for dynamically modifying an efficiency of an SMPS, according to aspects of the subject technology. The chart 500A shows a number of plots illustrating variation of the system efficiency versus load current (ILOAD) for an output voltage of 4.7 volt and a switching frequency of 2.1 MHz, and an inductance value of 1 microhenries ($\mu$H) of the inductor 122 of FIG. 3. Different plots of the chart 500A are associated with different input voltage values. (e.g., 2.5 V, 2.8 V, 3.85 V, 4.5 V).

The chart 500B shows a number of plots illustrating variation of the system efficiency versus load current (ILOAD) for an output voltage of 5.2 volt and a switching frequency of 2.1 MHz, and the inductance value of 1 μH of the inductor 122 of FIG. 3. Different plots of the chart 500B are associated with different input voltage values (e.g., 2.5 V, 2.8 V, 3.85 V, 4.5 V).

The chart 500C shows a number of plots illustrating variation of the system efficiency versus load current (ILOAD) for an output voltage of 5.6 volt and a switching frequency of 2.1 MHz, and the inductance value of 1 μH of the inductor 122 of FIG. 3. Different plots of the chart 500C are associated with different input voltage values (e.g., 2.5 V, 2.8 V, 3.85 V, 4.5 V).

The conclusion from reviewing the 500A, 500B, 500C is that with the PFM threshold current fixed at about 140 mA across all input voltage and output voltage value combinations, the efficiency is maintained over almost the entire load range.

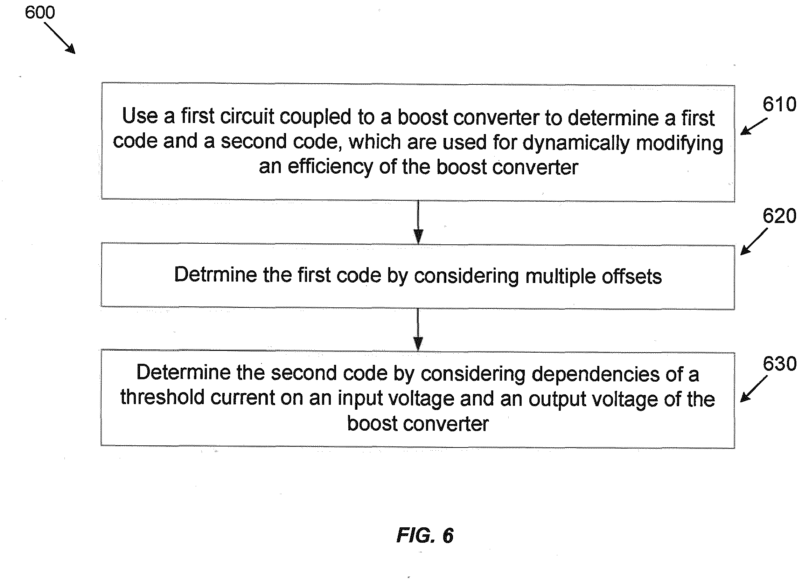

FIG. 6 is a flow chart illustrating an example of a process 600 for implementing a calibration procedure, according to aspects of the subject technology. The process 600 includes using a first circuit (e.g., including a first portion 205 of FIG. 2 and a second portion 305 of FIG. 3) coupled to a boost converter (e.g., boost converter circuit 110 of FIG.s 2 and 3) to determine a first code (e.g., PFM_EXT of Eq. 2) and a second code (e.g., IPFM_OS of Eq. 3), which are used for dynamically modifying an efficiency (e.g., see charts 500A, 500B and 500C of FG.s 5A, 5B and 5C) of the boost converter (block 610). The first code is determined by considering multiple offsets (e.g., Vramp_os, Vsns_os, PWMCOMP_OS, and PFMCOMP_OS) (block 620). The second code is determined by considering dependencies of a threshold current (e.g., i_PMF_TH) on an input voltage (e.g., input voltage 302 of FIG. 3) of and an output voltage (e.g., output voltage 304 of FIG. 3) of the boost converter (block 630).

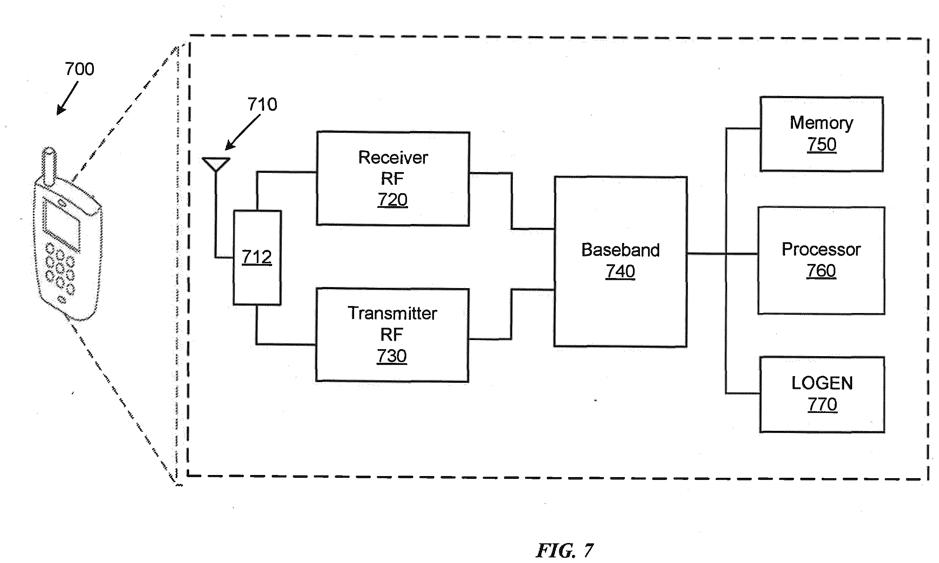

FIG. 7 illustrates an example of a wireless communication device, within which some aspects of the subject technology are implemented. In one or more implementations, the wireless communication device 700 can be wearable device such as a smartwatch or other electronic apparatus, including one or more health-sense device(s). The wireless communication device 700 may comprise an RF antenna 710, a duplexer 712, a receiver 720, a transmitter 730, a baseband processing module 740, a memory 750, a processor 760, and a local oscillator generator (LOGEN) 770. In various aspects of the subject technology, one or more of the blocks represented in FIG. 7 may be integrated on one or more semiconductor substrates. For example, blocks 720-770 may be realized in a single chip, a single system on a chip, or in a multichip chipset.

The receiver 720 may comprise suitable logic circuitry and/or code that may be operable to receive and process signals from the RF antenna 710. The receiver 720 may, for example, be operable to amplify and/or down convert received wireless signals. In various aspects of the subject technology, the receiver 720 may be operable to cancel noise in received signals, and may be linear over a wide range of frequencies. In this manner, the receiver 720 may be suitable for receiving signals in accordance with a variety of wireless standards such as Wi-Fi, WiMAX, BT, and various cellular standards. In various aspects of the subject technology, the receiver 720 may not use any sawtooth acoustic wave filters, and a few, or no off-chip discrete components such as large capacitors, and inductors.

The transmitter 730 may comprise suitable logic circuitry and/or code that may be operable to process and transmit signals from the RF antenna 710. The transmitter 730 may, for example, be operable to upconvert baseband signals to RF signals and amplify RF signals. In various aspects of the subject technology, the transmitter 730 may be operable to upconvert and amplify baseband signals processed in accordance with a variety of wireless standards. Examples of such standards may include Wi-Fi, WiMAX, BT, and various cellular standards. In various aspects of the subject technology, the transmitter 730 may be operable to provide signals for further amplification by one or more power amplifiers.

The duplexer 712 may provide isolation in the transmit band to avoid saturation of the receiver 720 or damaging parts of the receiver 720, and to relax one or more design requirements of the receiver 720. Furthermore, the duplexer 712 may attenuate the noise in the receiver band. The duplexer 712 may be operable in multiple frequency bands of various wireless standards.

The baseband processing module 740 may comprise suitable logic, circuitry, interfaces, and/or code that may be operable to perform the processing of baseband signals. The baseband processing module 740 may, for example, analyze received signals, generate control, and/or feedback signals for configuring various components of the wireless communication device 700, such as the receiver 720. The baseband processing module 740 may be operable to encode, decode, transcode, modulate, demodulate, encrypt, decrypt, scramble, descramble, and/or otherwise process data in accordance with one or more wireless standards.

The processor 760 may comprise suitable logic, circuitry, and/or code that may enable processing data and/or controlling operations of the wireless communication device 700. In this regard, the processor 760 may be enabled to provide control signals to various other portions of the wireless communication device 700. The processor 760 may also control the transfer of data between various portions of the wireless communication device 700. Additionally, the processor 760 may enable implementation of an OS, or otherwise execute code to manage operations of the wireless communication device 700. In one or more implementations, the processor 760 may be interfaced with transducer modules via existing host interface technologies such as an inter-integrated circuit (I2C), a serial interface protocol (SPI), a peripheral component interconnect express (PCIE), a universal asynchronous receiver-transmitter (UART), and/or other interface technologies, depending on the data rate needed to sample, and pipe from the transducers module to the processor 760.

The memory 750 may comprise suitable logic, circuitry, and/or code that may enable storage of various types of information such as received data, generated data, code, and/or configuration information. The memory 750 may comprise, for example, RAM, ROM, flash, and/or magnetic storage. In various aspects of the subject technology, information stored in the memory 750 may be utilized for configuring the receiver 720, and/or the baseband processing module 740.

The LOGEN 770 may comprise suitable logic, circuitry, interfaces, and/or code that may be operable to generate one or more oscillating signals of one or more frequencies. The LOGEN 770 may be operable to generate digital and/or analog signals. In this manner, the LOGEN 770 may be operable to generate one or more clock signals, and/or sinusoidal signals. Characteristics of the oscillating signals, such as the frequency and duty cycle, may be determined based on one or more control signals from, for example, the processor 760 and/or the baseband processing module 740.

In operation, the processor 760 may configure the various components of the wireless communication device 700 based on a wireless standard, according to which, it is designed to receive signals. Wireless signals may be received via the RF antenna 710, amplified, and down converted by the receiver 720. The baseband processing module 740 may perform noise estimation and/or noise cancellation, decoding, and/or demodulation of the baseband signals. In this manner, information in the received signal may be recovered and utilized appropriately. For example, the information may be audio and/or video to be presented to a user of the wireless communication device 700, data to be stored to the memory 750, and/or information affecting and/or enabling operation of the wireless communication device 700. The baseband processing module 740 may modulate, encode, and perform other processing on audio, video, and/or control signals to be transmitted by the transmitter 730 in accordance with various wireless standards.

In some implementations, all active components of the wireless communication device 700, for example, the receiver 720, the transmitter 730, the baseband processing module 740, the memory 750, the processor 760, and the LOGEN 770 may receive power from a power supply, including an SMPS including the integrated circuits 200 and 300 of FIGS. 2 and 3, respectively, of the subject technology, and benefit from the modified efficiency of the disclosed technology.

The predicate words "configured to," "operable to," and "programmed to" do not imply any particular tangible or intangible modification of a subject, but rather are intended to be used interchangeably. For example, a processor configured to monitor and control an operation, or a component may also mean the processor is being programmed to monitor and control the operation, or the processor being operable to monitor and control the operation. Likewise, a processor configured to execute code can be construed as a processor programmed to execute code, or operable to execute code.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

A phrase such as an "aspect" does not imply that such aspect is essential to the subject technology, or that such aspect applies to all configurations of the subject technology. A disclosure relating to an aspect may apply to all configurations, or one or more configurations. A phrase such as an "aspect" may refer to one or more aspects, and vice versa. A phrase such as a "configuration" does not imply that such configuration is essential to the subject technology, or that such configuration applies to all configurations of the subject technology. A disclosure relating to a configuration may apply to all configurations, or one or more configurations. A phrase such as a "configuration" may refer to one or more configurations, and vice versa.

The word "example" is used herein to mean "serving as an example or illustration." Any aspect or design described herein as an "example" is not necessarily to be construed as preferred or advantageous over other aspects or designs.

All structural and functional equivalents to the elements of the various aspects described throughout this disclosure that are known, or later come to be known to those of ordinary skill in the art, are expressly incorporated herein by reference, and are intended to be encompassed by the claims. Moreover, nothing disclosed herein is intended to be dedicated to the public, regardless of whether such disclosure is explicitly recited in the claims. No claim element is to be construed under the provisions of 35 U.S. C. §112(f) unless the element is expressly recited using the phrase, "means for" or, in the case of a method claim, the element is recited using the phrase, "step for." Furthermore, to the extent that the term "include," "have," or the like is used in the description or the claims, such term is intended to be inclusive in a manner similar to the term "comprise," as "comprise" is interpreted when employed as a transitional word in a claim.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above, generally in terms of their functionality. Whether such functionality is implemented as hardware or software depends upon the particular application, and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

**Claims**

1.  An apparatus, comprising:

    a first comparator circuit having a first offset voltage;
    a first circuit configured to generate a first code based on the first offset voltage;
    a second comparator circuit having a second offset voltage; and
    a second circuit configured to generate a second code based on the second offset voltage and the first code, wherein the first offset voltage and the second offset voltage are partially compensated based on the second code.

2.  The apparatus of claim 1, further comprising a third circuit coupled to the first comparator circuit, wherein:

    the third circuit has a third offset voltage, and
    the first code is generated based on the third offset voltage.

3.  The apparatus of claim 1 or 2, wherein the first circuit is configured to determine the first offset voltage in response to the first comparator circuit switching a binary output.

4.  The apparatus of any preceding claim, further comprising a sensing resistor coupled to the first comparator circuit, wherein:

    the sensing resistor has a fourth offset voltage, and
    the first code is generated based on the fourth offset voltage.

5.  The apparatus of any preceding claim, further comprising:
    a calculator circuit configured to:

    receive one or more sensed input and output voltages, and
    provide a third code based on the sensed input and output voltages.

6.  The apparatus of claim 5, further comprising a fourth circuit configured to generate a fifth code based on the second code and the third code.

7.  The apparatus of claim 6, wherein the fifth code is configured to further compensate the first offset voltage and the second offset voltage.

8.  The apparatus of claim 6 or 7, further comprising a plurality of components, wherein:

    each of the plurality of components comprises respective offset voltages, and
    the fifth code is configured to further compensate the respective offset voltages.

9.  An apparatus, comprising:

    a first component having a first offset voltage;
    a first circuit configured to:

        receive one or more sensed voltages, and
        provide a first code based on the one or more sensed voltages; and

a second circuit configured to:

receive the first code,
receive a second code, wherein the second code is based on the first offset voltage, and
generate a third code configured to compensate the first offset voltage.

10. The apparatus of claim 9, further comprising a comparator circuit, wherein the first offset voltage is associated with the comparator circuit.

11. The apparatus of claim 9 or 10, further comprising a component comprising a second offset voltage, wherein the third code is further configured to compensate the second offset voltage.

12. The apparatus of claim 11, wherein the component comprises a ramp voltage generator circuit, and/or a sensing resistor.

13. The apparatus of any of claims 9 to 12, further comprising a pulse width modulation (PWM) generator circuit configured to operate based on a threshold current, wherein the third code is configured to maintain an operating current for the PWM generator circuit above the threshold current.

14. The apparatus of any of claims 9 to 13, wherein the one or more sensed voltages comprise an input voltage from a power source, and/or the one or more sensed voltages comprise an output voltage for a load.

15. A circuit, comprising:

a plurality of components, wherein each of the plurality of components has a respective offset voltage;
a first circuit configured to generate a first code corresponding to i) the respective offset voltage and ii) a first comparator offset voltage;
a second circuit configured to generate a second code based on the first code and a second comparator offset voltage;
a current offset calculator circuit configured to:

obtain an input voltage,
provide a third code based on the input voltage; and

a third circuit configured to generate a fourth code based on the second code and the third code, wherein the fourth code is configured to compensate the respective offset voltages, the first comparator offset voltage, and the second comparator offset voltage.

*FIG. 1*

EP 4 432 534 A1

*FIG. 2*

EP 4 432 534 A1

**FIG. 3**

EP 4 432 534 A1

*FIG. 4*

400

Measured Data

| ILOAD(mA) | PFM(KHz) |
|---|---|
| 1 | 17.5 |
| 2 | 37.1 |
| 4 | 67 |
| 8 | 124 |
| 16 | 253 |

Extrapolated Data

| | |
|---|---|
| 140 | 2175 |

Extrapolated IPFM_TH [mA]

| 135.1 |
|---|

Trimmed Part #43: 4.5V in/4.7V out

$y = 15.513x + 3.5375$
$R^2 = 0.9993$

402

PFM Freq. [KHz]

ILOAD [mA]

f_PFM(KHz)
Extrapolated Data
Linear (f_PFM(KHz))

EP 4 432 534 A1

FIG. 5B

FIG. 5A

FIG. 5C

600

610 Use a first circuit coupled to a boost converter to determine a first code and a second code, which are used for dynamically modifying an efficiency of the boost converter

620 Detrmine the first code by considering multiple offsets

630 Determine the second code by considering dependencies of a threshold current on an input voltage and an output voltage of the boost converter

*FIG. 6*

FIG. 7

EP 4 432 534 A1

Europäisches
Patentamt

European
Patent Office

Office européen
des brevets

# EUROPEAN SEARCH REPORT

**Application Number**

EP 24 16 2639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/194880 A1 (WIBBEN JOSHUA [US]) 9 July 2015 (2015-07-09) | 1,2,4-15 | INV. H02M1/00 |
| A | * paragraphs [0005], [0026] - paragraph [0042]; figures 1-2 * | 3 | H02M3/156 H02M3/157 |
| | ----- | | |
| X | US 2018/062509 A1 (DUONG QUOC HOANG [KR] ET AL) 1 March 2018 (2018-03-01) * paragraph [0056] - paragraph [0066]; figures 4-7 * | 1,9,15 | |
| | ----- | | |
| A | US 2011/127981 A1 (MIYAMAE TORU [JP]) 2 June 2011 (2011-06-02) * paragraph [0018] - paragraph [0024]; figures 1,2 * | 1-15 | |
| | ----- | | |
| A | US 8 058 859 B2 (XU PENG [US]; MONOLITHIC POWER SYSTEMS INC [US]) 15 November 2011 (2011-11-15) * paragraph [0015] - paragraph [0028]; figures 1-3 * | 1-15 | |
| | ----- | | |

**TECHNICAL FIELDS SEARCHED (IPC)**

H02M

The present search report has been drawn up for all claims

| Place of search | Date of completion of the search | Examiner |
|---|---|---|
| Munich | 16 July 2024 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 ..............................................................................
& : member of the same patent family, corresponding document

EPO FORM 1503 03.82 (P04C01)

1

## ANNEX TO THE EUROPEAN SEARCH REPORT
## ON EUROPEAN PATENT APPLICATION NO.

EP 24 16 2639

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| US 2015194880 | A1 | 09-07-2015 | US | 2015194880 A1 | 09-07-2015 |
| | | | WO | 2015105601 A1 | 16-07-2015 |
| US 2018062509 | A1 | 01-03-2018 | CN | 107786087 A | 09-03-2018 |
| | | | KR | 20180023742 A | 07-03-2018 |
| | | | US | 2018062509 A1 | 01-03-2018 |
| US 2011127981 | A1 | 02-06-2011 | JP | 5507980 B2 | 28-05-2014 |
| | | | JP | 2011114977 A | 09-06-2011 |
| | | | US | 2011127981 A1 | 02-06-2011 |
| US 8058859 | B2 | 15-11-2011 | CN | 1975622 A | 06-06-2007 |
| | | | TW | 200622546 A | 01-07-2006 |
| | | | US | 2006043953 A1 | 02-03-2006 |

EPO FORM P0459

For more details about this annex : see Official Journal of the European Patent Office, No. 12/82